# EUROPEAN PATENT APPLICATION

(11) **EP 1 526 360 A1**
(43) Date of publication of application: **27.04.2005**
(21) Application number: 04292373.0
(22) Date of filing: 06.10.2004
(51) Int. Cl.: G01C 21/36

(54) **Method for displaying three-dimensional map**

(30) Priority: 20.10.2003 KR 2003072905
(71) Applicant: LG ELECTRONICS INC., Seoul 150-721 (KR)
(72) Inventor: Cho, Hang Shin, Seongnam-Si Gyeonggi-Do, 462-838 (KR)
(74) Representative: Loisel, Bertrand

(57) **Abstract**

The present invention provides a method for displaying a three-dimensional map, wherein the amount of calculation is reduced and processing speed is increased when the three-dimensional map is displayed on a display panel by converting map data with two-dimensional coordinates into map data with three-dimensional coordinates by means of a perspective projection method.

In the method of the present invention, map data with three-dimensional coordinates of a certain area with respect to coordinates of a reference position are loaded, or map data with two-dimensional coordinates are loaded and then modeled into map data with three-dimensional coordinates. The map data with three-dimensional coordinates are converted into those in a coordinate system based on the view point. A plurality of objects in the map data are classified according to properties thereof. The classified objects are rendered on a plurality of layers. The plurality of layers with the respective objects rendered thereon are displayed on one display panel in an overlapped state.

## Description

### BACKGROUND OF THE INVENTION

### 1. Field of the Invention

The present invention relates to a method for displaying a three-dimensional map, wherein the three-dimensional map is displayed on a display panel by converting map data with two-dimensional coordinates into map data with three-dimensional coordinates by means of a perspective projection method. More particularly, the present invention relates to a method for displaying a three-dimensional map, wherein a plurality of objects of map data with three-dimensional coordinates are classified according to properties thereof and then subjected to rendering on a plurality of respective layers which in turn are transparently overlapped with one another to display the three-dimensional map.

### 2. Description of the Related Art

With the development of position-based technology and the improvement of the performance of embedded computers, much attention is being paid to the displaying of three-dimensional maps exhibiting three-dimensional effects such as bird's eye views on display panels in a variety of fields providing map information, including navigation systems which are installed on vehicles such as cars to guide the travel of vehicles while displaying current locations of the vehicles together with maps on display panels, or websites providing map information over the Internet .

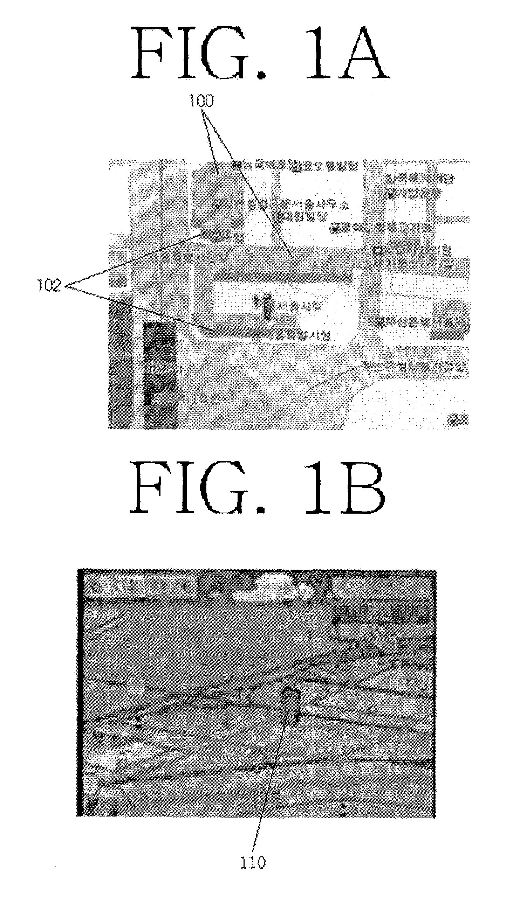

To display a three-dimensional map on a display panel in the prior art, as shown in Fig. 1a, a two-dimensional map including text data for representing building and place names is displayed on a display panel, and a shadow 102 is forcibly added to a front portion of a building 100 in the displayed two-dimensional map to exhibit the same effects as a three-dimensional map. Alternatively, as shown in Fig. 1b, a two-dimensional map is slantly displayed in a display panel, and a two-dimensional building icon 110 and text data are displayed in the two-dimensional map to exhibit three-dimensional effects.

However, the representation of such a three-dimensional map as above is not to the representation based on conversion of map data with two-dimensional coordinates into map data with three-dimensional coordinates through correct perspective projection, but merely exhibits a very rudimentary level of three-dimensional effects due to lack of techniques and a great deal amount of calculation. Thus, as compared with viewing a two-dimensional map, there may be a problem in that a user will be led to more confusion.

In Korean Patent Application No. 2003-32760 previously filed in the name of the present applicant, a three-dimensional map is displayed on a display panel by converting map data with two-dimensional coordinates into map data with three-dimensional coordinates by means of a correct perspective projection method.

However, in the prior art, respective objects to be displayed in the three-dimensional map are displayed on the display panel through indiscriminate processing without classifying them according to properties thereof. Therefore, there are problems in that unnecessary calculation processes increase and thus the total amount of calculation increases, thereby lowering processing speed.

### SUMMARY OF THE INVENTION

An object of the present invention is to provide a method for displaying a three-dimensional map, wherein the amount of calculation is reduced and processing speed is increased when the three-dimensional map is displayed on a display panel by converting map data with two-dimensional coordinates into map data with three-dimensional coordinates by means of a perspective projection method.

In the method of displaying the three-dimensional map according to the present invention for achieving the object, a plurality of objects in the map data with three-dimensional coordinates are classified according to properties thereof. For example, the classification is made into background colors, planar objects placed on the bottom of space, a travel path of a vehicle, three-dimensional objects, text data such as building and place names, guide objects such as road signs and guide phrases, and the like. The classified objects are subjected to rendering on a plurality of layers, respectively. The plurality of layers are displayed on the display panel while being transparently overlapped with one another in sequence, thereby finally displaying the three-dimensional map.

According to a first feature of the present invention, map data of three-dimensional models are used. The map data of three-dimensional models can be obtained by modeling map data with two-dimensional coordinates into the map data with three-dimensional coordinates. Alternatively, map data with three-dimensional coordinates modeled in advance may be used.

According to a second feature of the present invention, the map data with three-dimensional coordinates regarding the first feature of the present invention are roughly classified into planar objects to be placed on the bottom of space, such as roads, rivers, sears, green zones and place names, and three-dimensional objects such as major buildings to be displayed in three dimensions.

According to a third feature of the present invention, the objects of the map data with two-dimensional coordinates regarding the second feature of the present invention are processed through different three-dimensional processing and are then output onto different layers, respectively. At this time, since the planar objects are not subjected to the process of determining overlapped and hidden sides during the three-dimensional processing, it is possible to reduce the amount of calculation.

According to a fourth feature of the present invention, the objects of the map data with three-dimensional coordinates, which have been output onto the respective layers, are finally integrated in consideration of the order of the layers and then output to and displayed on a display panel. For example, a background layer is first displayed on the display panel, and a planar object layer, a travel path layer, a three-dimensional object layer, a text data layer and the like are overlapped on the background layer one above another in this order and then output while remaining regions of the layers except component regions thereof are transparently processed, thereby displaying a final three-dimensional map.

According to a fifth feature of the present invention, since only indispensable three-dimensional processing is performed for the respective objects, a burden on the amount of calculation can be reduced as a whole.

According to an aspect of the present invention, there is provided a method for displaying a three-dimensional map, comprising a loading step of, by a control unit, loading map data with three-dimensional coordinates of a certain area with respect to a reference position for two-dimensional coordinates from a map storage unit; a view point coordinate converting step of setting a view point at the reference position for two-dimensional coordinates, and converting the map data with three-dimensional coordinates loaded in the loading step into those in a three-dimensional coordinate system based on the view point; a rendering step of classifying respective objects in the map data, which have been converted into those in the three-dimensional coordinate system based on the view point in the view point coordinate converting step, according to properties thereof, and rendering the classified objects on a plurality of layers; and a displaying step of displaying the plurality of layers with the respective objects rendered thereon in the rendering step on one display panel in an overlapped state.

According to another aspect of the present invention, there is provided a method for displaying a three-dimensional map, comprising a three-dimensional environment initializing step of initializing display environments under which the three-dimensional map is displayed; a view point setting step of setting a view point and a sight line with respect to a reference position for two-dimensional coordinates after the three-dimensional environment initializing step; a projection parameter setting step of setting projection parameters after the view point setting step; a three-dimensional modeling step of loading map data with two-dimensional coordinates of a certain area with respect to the reference position for two-dimensional coordinates, and modeling the loaded map data into map data with three-dimensional coordinates; a view point coordinate converting step of converting the map data with three-dimensional coordinates modeled in the three-dimensional modeling step into those in a three-dimensional coordinate system based on the view point set in the view point setting step; a rendering step of classifying a plurality of objects in the map data, which have been converted into those in the three-dimensional coordinate system based on the view point in the view point converting step, according to properties thereof, processing the classified objects according to values set in the three-dimensional environment initializing step and projection parameter setting step, and rendering them on a plurality of layers, respectively; and a displaying step of displaying the plurality of layers with the objects rendered thereon in the rendering step on one display panel by overlapping them one above another in a predetermined order.

The three-dimensional environment initializing step may comprise the steps of setting colors and their depths for use in displaying respective sides of buildings according to the view point, the sight line, the direction of a light source, the intensity of the light source, and angles of the respective sides of the buildings; initializing depth buffers for indicating distances from the view point to positions where objects to be displayed will be displayed; and setting a predetermined color as a background color of a screen of the display panel.

The three-dimensional modeling step may comprise the steps of generating map data of a bottom map with three-dimensional coordinates from the loaded map data with two-dimensional coordinates; setting heights of nodes for respective buildings and generating buildings with three-dimensional coordinates to have the set heights; and generating a travel path of a vehicle.

The reference position may be a current vehicle location which a control unit detects from navigation messages received by a GPS receiver, or a position input through a command input unit, and the view point setting step may comprise the step of setting a position elevated by a predetermined height at the reference position as the view point.

The method may further comprise the step of removing objects existing outside a visual field in the three-dimensional map between the view point coordinate converting step and the rendering step.

The rendering step may comprise a background rendering step of rendering a background color on a background layer; a planar object rendering step of rendering planar objects, which will be placed on the bottom of the three-dimensional map, on a planar object layer; a three-dimensional object rendering step of rendering three-dimensional objects on a three-dimensional object layer; and a text data rendering step of rendering text data on a text data layer. The displaying step may comprise the step of sequentially displaying the background layer, the planar object layer, the three-dimensional object layer and the text data layer with the respective objects rendered thereon in the rendering step on the display panel.

The planar object rendering step may comprise the steps of projecting respective nodes for the planar objects on a projection plane to obtain values of two-dimensional projection coordinates; converting the values of two-dimensional projection coordinates of the planar objects into screen coordinates; and rendering the planar objects with the converted screen coordinates on the planar object layer.

The three-dimensional object rendering step may comprise the step of performing three-dimensional processing for the three-dimensional objects using a general three-dimensional graphic library and rendering them on the three-dimensional object layer.

The text data rendering step may comprise the steps of projecting the text data on a projection plane to obtain values of two-dimensional projection coordinates; converting the values of two-dimensional projection coordinates of the text data into screen coordinates; and rendering the text data with the converted screen coordinates on the text data layer.

The step of displaying the planar object layer, the three-dimensional object layer, and the text data layer may comprises the step of displaying them by transparently processing remaining regions thereof except the planar objects, the three-dimensional objects and the text data, respectively.

The rendering step may further comprise a travel path rendering step of rendering a travel path of a vehicle on a travel path layer; and a guide object rendering step of rendering two-dimensional guide objects on a guide object layer. In such a case as above, the displaying step may comprise the steps of displaying the travel path layer between the planar object layer and the three-dimensional object layer on the display panel; and displaying the guide object layer after the text data layer on the display panel.

The travel path rendering step may comprise the steps of projecting the travel path of the vehicle on a projection plane to obtain values of two-dimensional projection coordinates; converting the values of two-dimensional projection coordinates of the travel path into screen coordinates; and rendering the travel path with the converted screen coordinates on the travel path layer.

The guide object rendering step may comprise the step of calculating coordinates of positions where the guide objects will be displayed on a screen of the display panel, and rendering the guide objects at the calculated coordinates of the positions on the guide object layer.

The step of displaying the travel path layer and the guide object layer may comprise the step of displaying them by transparently processing remaining regions thereof except the travel path and the guide objects, respectively. When the three-dimensional object layer is displayed, regions of the three-dimensional object layer overlapping with the travel path on the travel path layer may be transparently processed so that the travel path can be fully displayed.

### BRIEF DESCRIPTION OF THE DRAWINGS

The above and other objects, features and advantages of the present invention will become apparent from the following description of a preferred embodiment given in conjunction with the accompanying drawings, in which:
Figs. 1a and 1b are exemplary views showing three-dimensional maps displayed on display panels according to conventional display methods;
Fig. 2 is a block diagram exemplarily showing a configuration of a navigation system to which a display method of the present invention is applied;
Figs. 3a and 3b are flowcharts illustrating the display method of the present invention; and
Fig. 4 is a view illustrating operations for overlapping a plurality of layers that have been subjected to rendering and for displaying them on a display panel according to the display method of the present invention.

### DETAILED DESCRIPTION OF THE INVENTION

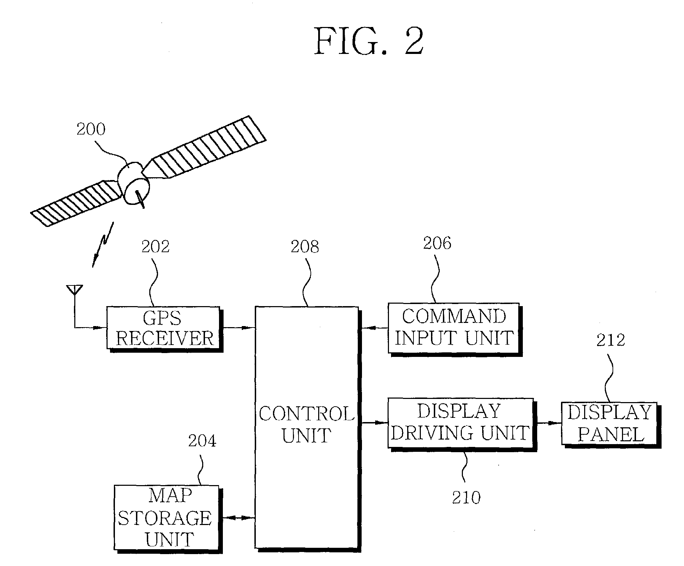

Hereinafter, a method for displaying a three-dimensional map according to the present invention will be described in detail with reference to the accompanying drawings, especially Figs. 2 to 4.

Fig. 2 is a block diagram exemplarily showing a configuration of a navigation system to which the display method of the present invention is applied. As shown in the figure, the navigation system comprises a GPS (global positioning system) receiver 202 for receiving navigation messages transmitted by a plurality of GPS satellites 200; a map storage unit 204 for beforehand storing map data with two-dimensional coordinates therein; a command input unit 206 for receiving operation commands according to user's manipulation; a control unit 208 capable of controlling operations for determining a current vehicle location from the navigation messages received by the GPS receiver 202, for reading out map data with two-dimensional coordinates for a certain area from the map storage unit 204 based on the determined current vehicle location, for converting the read map data with two dimensional coordinates into map data with three-dimensional coordinates by means of a perspective projection method, for classifying respective objects and guide objects for the travel of a vehicle in the converted map data with three-dimensional coordinates according to properties thereof, for performing rendering for the classified objects, and for displaying them so as to guide a travel path of the vehicle; and a display driving unit 210 for causing the current vehicle location and the travel path together with a three-dimensional map to be displayed on a display panel 212 under the control of the control unit 208.

The GPS receiver 202 of the navigation system constructed as above receives the navigation messages transmitted by the plurality of GPS satellites 200 placed over the earth and inputs them into the control unit 208.

When a vehicle travels, the control unit 208 detects the current vehicle location using the navigation messages received by the GPS receiver 202 and reads out map data with two-dimensional coordinates and text data for a certain area from the map storage unit 204 based on the determined current vehicle location.

Then, the control unit 208 converts the read map data with two-dimensional coordinates into map data with three-dimensional coordinates by means of the perspective projection method. That is, the read map data with two-dimensional coordinates are converted into map data with three-dimensional coordinates based on not only a view point set at a position elevated by a predetermined height at the current vehicle location but also a sight line defined by a travel direction of the vehicle.

When the conversion of the map data is completed, the control unit 208 classifies the respective objects and the guide objects for the travel of the vehicle in the map data according to properties thereof, performs the rendering for the classified objects on a plurality of layers and causes the respective layers to be transparently overlapped with one another in sequence and to be displayed on the display panel 212 through the display driving unit 210.

Here, the navigation system has been described by way of example as being fixedly installed at the vehicle. On the contrary, in a case where such a navigation system is installed in a mobile apparatus, there is a limitation on the storage capacity of the map storage unit 204. Accordingly, upon implementation of the present invention, in response to commands from the command input unit 206, connection may be made to a map-providing server to download map data with two-dimensional coordinates for a certain area, for example, the entire area of Seoul City, and the downloaded map data may be stored in the map storage unit 204 and then used. Further, although the map data with two-dimensional coordinates has been described by way of example as being stored in the map storage unit 204, map data with three-dimensional coordinates may be stored in the map storage unit 204 and then used.

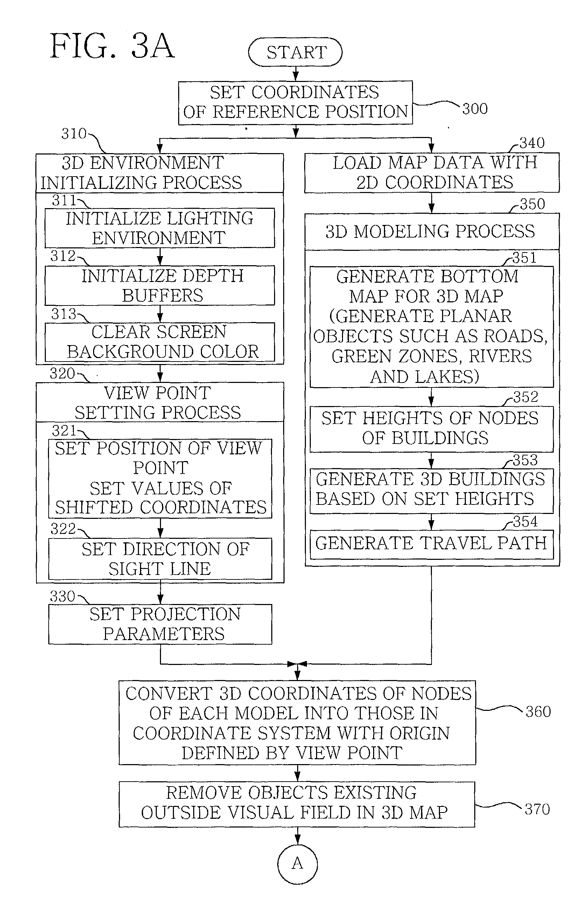

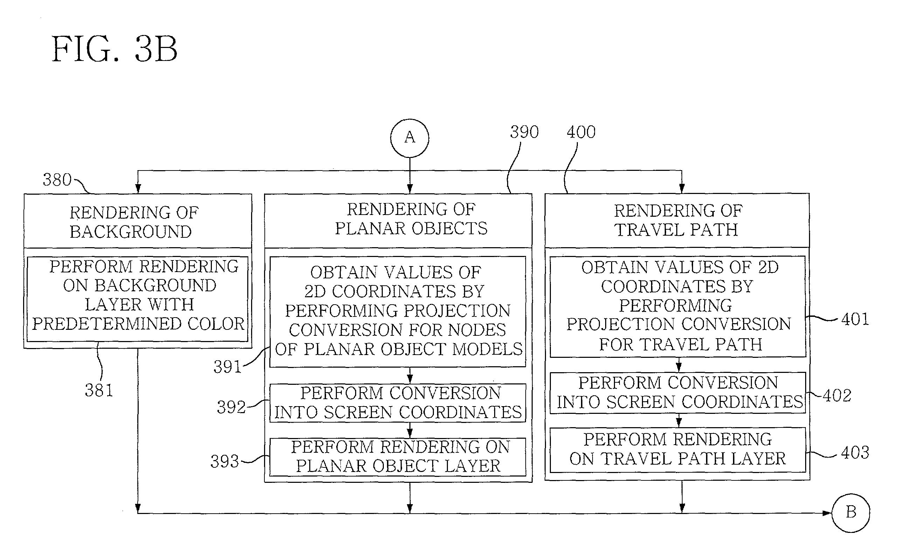

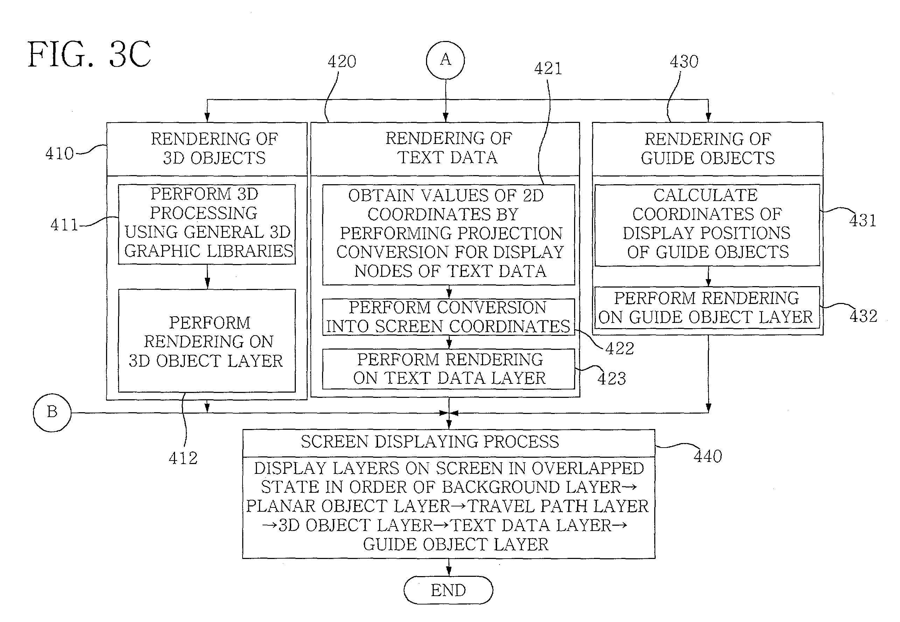

Figs. 3a and 3b are flowcharts illustrating the display method of the present invention. As shown in the figures, the control unit 208 sets coordinates of a reference position for use in generating map data with three-dimensional coordinates (step 300). Here, as for the coordinates of the reference position in step 300, coordinates of a current vehicle location that the control unit 208 detects from navigation messages received by the GPS receiver 202, or coordinates of a position input through the command input unit 206 by a user may be set as the coordinates of the reference position.

When the coordinates of the reference position is set in step 300, the control unit 208 performs the process of initializing three-dimensional environments for displaying a three-dimensional map or three-dimensional models on the display panel 212 (step 310). The process of initializing the three-dimensional environments performed in step 310 comprises the following steps. A lighting environment is initialized (step 311). The initialization of the lighting environment in step 311 sets a view point, a sight line, the direction of a light source, the intensity of the light source, colors and their depths for indicating respective sides of buildings according to the angles of the respective sides of the buildings, and the like. Then, depth buffers are initialized (step 312). That is, the depth buffers for indicating distances from the view point to positions where certain objects will be displayed are initialized. Then, a background color of a screen of the display panel is cleared and set to a predetermined color (step 313).

When the process of initializing the three-dimensional environments is completed in step 310, the control unit 208 performs the process of setting a view point (step 320). The process of setting the view point in step 320 comprises the following steps. First, the position of the view point is set (step 321). As for the setting of the position of the view point, for example, coordinates of a position elevated by a predetermined height at the set coordinates of the reference position are set as the view point. When the view point has been set, a sight line from the set position of the view point to a three-dimensional map or model is then set (step 322). For example, a travel direction of the vehicle is set as the sight line.

When the process of setting the view point is completed in step 320, projection parameters for use in projection conversion in which map data with three-dimensional coordinates will be projected on a projection plane are set (step 330).

While the control unit 208 sequentially performs the three-dimensional environment initializing process in step 310, the view point setting process in step 320 and the projection parameter setting process in step 330, the control unit loads map data with two-dimensional coordinates, which will be converted into map data with three-dimensional coordinates, from the map storage unit 204 (step 340), and performs a three-dimensional modeling process of modeling the loaded map data with two-dimensional coordinates into map data with three-dimensional coordinates (step 350).

The three-dimensional modeling process in step 350 comprises the following steps. Planar objects with two-dimensional coordinates, such as roads, green zones, rivers and lakes, placed on the bottom of a three-dimensional map displayed on the display panel 112 are generated into planar objects with three-dimensional coordinates (step 351). That is, two-dimensional coordinates of the planar objects are expanded to three-dimensional coordinates in the form of (x, y, 0) so that the planar objects can be placed on the bottom of the three-dimensional map.

The heights of nodes of respective buildings, which are three-dimensional objects with three-dimensional coordinates, are set (step 352). The respective buildings having the set heights, i.e. the three-dimensional objects with three-dimensional coordinates, are generated (step 353), and the travel path of the vehicle is generated using arrows or dotted lines (step 354).

Here, if map data with three-dimensional coordinates have been previously modeled and stored in the map storage unit 204, map data with three-dimensional coordinates of a certain area based on the coordinates of the reference position can be loaded directly from the map storage unit 204 without performing the process of loading the map data with two-dimensional coordinates in step 340 and the three-dimensional modeling process in step 350.

In step 360, the three-dimensional coordinates of the planar objects and three-dimensional objects modeled during the three-dimensional modeling process in step 350 or three-dimensional coordinates of the planar objects and three-dimensional objects in the loaded map data with three-dimensional coordinates are converted into those in a view point-based coordinate system with an origin defined by the view point that has been set during the view point setting process in step 320. In step 370, all objects existing outside a visual field in the three-dimensional map are removed. Thereafter, rendering processes of rendering objects to be displayed in the three-dimensional map are performed in steps 380, 390, 400, 410, 420 and 430.

Rendering of a background in step 380 is to render a background screen. The background color of the screen that has been set after clearing in step 313 is rendered on a background layer (step 381).

Rendering of planar objects in step 390 is to render planar objects, such as rivers, lakes, roads and green zones, placed on the bottom of the three-dimensional map. The values of two-dimensional projection coordinates are obtained by performing projection conversion for three-dimensional coordinates of nodes of the planar objects onto a projection plane (step 391). The values of the two-dimensional projection coordinates are converted into those of screen coordinates (step 392). Then, rendering on a planar object layer is performed (step 393). In the rendering of the planar objects, all the planar objects exist in one plane. Thus, there is no need for the process of determining overlapped and hidden portions of the planar objects, resulting in reduction of overall calculation processes.

Rendering of a travel path in step 400 is to render a road path along which a vehicle travels. The travel path of the vehicle generated in step 354 is projected on a projection plane to obtain the values of two-dimensional projection coordinates (step 401), and the values of two-dimensional projection coordinates are then converted into those of screen coordinates (step 402). Thereafter, rendering on a travel path layer is performed (step 403).

Rendering of three-dimensional objects in step 410 is to render three-dimensional objects such as buildings. The three-dimensional objects are subjected to three-dimensional processing using general 3D graphic libraries (step 411) and then rendered on a three-dimensional object layer (step 412).

Rendering of text data in step 420 is to render text data such as place names and building names. Display nodes where text data will be displayed are projected on the projection plane to obtain the values of two-dimensional projection coordinates (step 421), and the values of two-dimensional projection coordinates are then converted into those of screen coordinates (step 422). Thereafter, rendering on a text data layer is performed (step 423).

Rendering of guide objects in step 430 is to render guide objects such as road signs and guide phrases. Coordinates of positions where the guide objects will be displayed are calculated (step 431), and rendering on a guide object layer is performed (step 432).

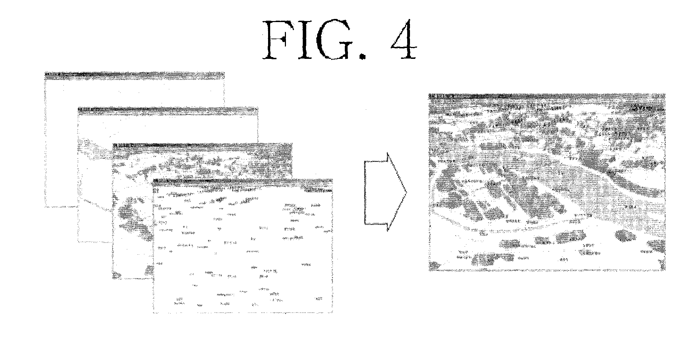

When the rendering of the background, planar objects, travel path, three-dimensional objects, text data and guide objects are completed in such a manner, a screen displaying process of transparently and sequentially overlapping and outputting the plurality of layers, which have been subjected to the rendering, to be displayed on the display panel 212 is performed as shown in Fig. 4 (step 440).

The order of outputting and displaying the plurality of layers on the display panel during the screen displaying process in step 440 is determined according to which components are overlapped and hidden in a final picture. For example, buildings in the three-dimensional object layer should be displayed after the planar object layer has been displayed, in order to prevent a phenomenon in which the planar objects cover and conceal the three-dimensional objects.

In the present invention, the background layer is first output to represent a background color on the display panel, and the planar object layer with rivers, green zones, roads, seas and the like rendered thereon is displayed to be overlapped with the background layer. Then, the travel path layer and the three-dimensional object are sequentially output and displayed above the planar object layer. At this time, remaining regions of each layer except the respective objects to be displayed in the layer should be transparently processed before the displaying thereof on the display panel. Further, since some portions of the travel path in the travel path layer are covered with the three-dimensional objects upon output of the three-dimensional objects, the three-dimensional objects overlapping with the travel path should be transparently processed so that the travel path can be fully displayed.

Then, the text data layer is output and displayed on the display panel, and the guide object layer is finally output and displayed on the display panel.

As described above, according to the present invention, there are advantages in that respective objects to be displayed in a three-dimensional map are classified according to properties thereof and then displayed in an overlapped state on a display panel, thereby reducing unnecessary calculation processes and improving the processing speed of the three-dimensional map.

Although the present invention has been illustrated and described in connection with the preferred embodiment, it will be readily understood by those skilled in the art that various adaptations and changes can be made thereto without departing from the spirit and scope of the present invention defined by the appended claims. That is, although the present invention has been described by way of example as being applied to a case where a three-dimensional map is displayed on a display panel in a navigation system for guiding the travel of a vehicle, it is not limited thereto. The present invention can be simply applied to cases where three-dimensional maps are displayed in Internet websites. In this case, the rendering of the travel path and the guide objects may not be performed. In such a manner, numerous variations can be implemented according to the present invention.

## Claims

1. A method for displaying a three-dimensional map, comprising:
a loading step of, by a control unit, loading map data with three-dimensional coordinates of a certain area with respect to a reference position for two-dimensional coordinates from a map storage unit;
a view point coordinate converting step of setting a view point at the reference position for two-dimensional coordinates, and converting the map data with three-dimensional coordinates loaded in the loading step into those in a three-dimensional coordinate system based on the view point;
a rendering step of classifying respective objects in the map data, which have been converted into those in the three-dimensional coordinate system based on the view point in the view point coordinate converting step, according to properties thereof, and rendering the classified objects on a plurality of layers; and
a displaying step of displaying the plurality of layers with the respective objects rendered thereon in the rendering step on one display panel in an overlapped state.

2. The method as claimed in claim 1, wherein the reference position is a current vehicle location which the control unit detects from navigation messages received by a GPS receiver, or a position input through a command input unit.

3. The method as claimed in claim 1, wherein the view point is set at a position elevated by a predetermined height at the reference position.

4. The method as claimed in claim 1, between the view point coordinate converting step and the rendering step, further comprising:
a removal step of removing objects existing outside a visual field in the three-dimensional map.

5. The method as claimed in claim 1, wherein the rendering step comprises:
a background rendering step of rendering a background color on a background layer;
a planar object rendering step of rendering planar objects on a planar object layer, the planar objects being placed on the bottom of the three-dimensional map;
a three-dimensional object rendering step of rendering three-dimensional objects on a three-dimensional object layer; and
a text data rendering step of rendering text data on a text data layer, and
the displaying step comprises the step of sequentially displaying the background layer, the planar object layer, the three-dimensional object layer and the text data layer with the respective objects rendered thereon in the rendering step on the display panel.

6. The method as claimed in claim 5, wherein the planar object rendering step comprises the steps of:
projecting respective nodes for the planar objects on a projection plane to obtain values of two-dimensional projection coordinates;
converting the values of two-dimensional projection coordinates of the planar objects into screen coordinates; and
rendering the planar objects with the converted screen coordinates on the planar object layer.

7. The method as claimed in claim 5, wherein the three-dimensional object rendering step comprises the step of:
performing three-dimensional processing for the three-dimensional objects using a general three-dimensional graphic library and rendering them on the three-dimensional object layer.

8. The method as claimed in claim 5, wherein the text data rendering step comprises the steps of:
projecting the text data on a projection plane to obtain values of two-dimensional projection coordinates;
converting the values of two-dimensional projection coordinates of the text data into screen coordinates; and
rendering the text data with the converted screen coordinates on the text data layer.

9. The method as claimed in claim 5, wherein the step of displaying the planar object layer, the three-dimensional object layer, and the text data layer comprises the step of:
displaying them by transparently processing remaining regions thereof except the planar objects, the three-dimensional objects and the text data, respectively.

10. The method as claimed in claim 5, wherein the rendering step further comprises:
a travel path rendering step of rendering a travel path of a vehicle on a travel path layer; and
a guide object rendering step of rendering two-dimensional guide objects on a guide object layer, and
the displaying step further comprises the steps of:
displaying the travel path layer between the planar object layer and the three-dimensional object layer on the display panel; and
displaying the guide object layer after the text data layer on the display panel.

11. The method as claimed in claim 10, wherein the travel path rendering step comprises the steps of:
projecting the travel path of the vehicle on a projection plane to obtain values of two-dimensional projection coordinates;
converting the values of two-dimensional projection coordinates of the travel path into screen coordinates; and
rendering the travel path with the converted screen coordinates on the travel path layer.

12. The method as claimed in claim 10, wherein the guide object rendering step comprises the step of:
calculating coordinates of positions where the guide objects will be displayed on a screen of the display panel, and rendering the guide objects at the calculated coordinates of the positions on the guide object layer.

13. The method as claimed in claim 10, wherein the step of displaying the travel path layer and the guide object layer comprises the step of:
displaying them by transparently processing remaining regions thereof except the travel path and the guide objects, respectively.

14. The method as claimed in claim 10, wherein when the three-dimensional object layer is displayed, regions of the three-dimensional object layer overlapping with the travel path on the travel path layer are transparently processed so that the travel path can be fully displayed.

15. A method for displaying a three-dimensional map, comprising:
a three-dimensional environment initializing step of initializing display environments under which the three-dimensional map is displayed;
a view point setting step of setting a view point and a sight line with respect to a reference position for two-dimensional coordinates;
a projection parameter setting step of setting projection parameters;
a three-dimensional modeling step of loading map data with two-dimensional coordinates of a certain area with respect to the reference position for two-dimensional coordinates, and modeling the loaded map data into map data with three-dimensional coordinates;
a view point coordinate converting step of converting the map data with three-dimensional coordinates modeled in the three-dimensional modeling step into those in a three-dimensional coordinate system based on the view point set in the view point setting step;
a rendering step of classifying a plurality of objects in the map data, which have been converted into those in the three-dimensional coordinate system based on the view point in the view point converting step, according to properties thereof, processing the classified objects according to values set in the three-dimensional environment initializing step and projection parameter setting step, and rendering them on a plurality of layers, respectively; and
a displaying step of displaying the plurality of layers with the objects rendered thereon in the rendering step on one display panel by overlapping them one above another in predetermined order.

16. The method as claimed in claim 15, wherein the three-dimensional environment initializing step comprises the steps of:
setting colors and their depths for use in displaying respective sides of buildings according to the view point, the sight line, the direction of a light source, the intensity of the light source, and angles of the respective sides of the buildings;
initializing depth buffers for indicating distances from the view point to positions where objects to be displayed will be displayed; and
setting a predetermined color as a background color of a screen of the display panel.

17. The method as claimed in claim 15, wherein the reference position is a current vehicle location which a control unit detects from navigation messages received by a GPS receiver, or a position input through a command input unit.

18. The method as claimed in claim 15, wherein the view point setting step comprises the step of setting a position elevated by a predetermined height at the reference position as the view point, and setting the sight line at the set view point.

19. The method as claimed in claim 15, wherein the three-dimensional modeling step comprises the steps of:
generating map data of a bottom map with three-dimensional coordinates from the loaded map data with two-dimensional coordinates;
setting heights of nodes for respective buildings and generating buildings with three-dimensional coordinates to have the set heights; and
generating a travel path of a vehicle.

20. The method as claimed in claim 15, between the view point coordinate converting step and the rendering step, further comprising the step of:
removing objects existing outside a visual field in the three-dimensional map.

21. The method as claimed in claim 15, wherein the rendering step comprises:
a background rendering step of rendering a background color on a background layer;
a planar object rendering step of rendering planar objects on a planar object layer, the planar objects being placed on the bottom of the three-dimensional map;
a three-dimensional object rendering step of rendering three-dimensional objects on a three-dimensional object layer; and
a text data rendering step of rendering text data on a text data layer, and
the displaying step comprises the step of sequentially displaying the background layer, the planar object layer, the three-dimensional object layer and the text data layer with the respective objects rendered thereon in the rendering step on the display panel.

22. The method as claimed in claim 21, wherein the planar object rendering step comprises the steps of:
projecting respective nodes for the planar objects on a projection plane to obtain values of two-dimensional projection coordinates;
converting the values of two-dimensional projection coordinates of the planar objects into screen coordinates; and
rendering the planar objects with the converted screen coordinates on the planar object layer.

23. The method as claimed in claim 21, wherein the three-dimensional object rendering step comprises the step of:
performing three-dimensional processing for the three-dimensional objects using a general three-dimensional graphic library and rendering them on the three-dimensional object layer.

24. The method as claimed in claim 21, wherein the text data rendering step comprises the steps of:
projecting the text data on a projection plane to obtain values of two-dimensional projection coordinates;
converting the values of two-dimensional projection coordinates of the text data into screen coordinates; and
rendering the text data with the converted screen coordinates on the text data layer.

25. The method as claimed in claim 21, wherein the step of displaying the planar object layer, the three-dimensional object layer, and the text data layer comprises the step of:
displaying them by transparently processing remaining regions thereof except the planar objects, the three-dimensional objects and the text data, respectively.

26. The method as claimed in claim 21, wherein the rendering step further comprises:
a travel path rendering step of rendering a travel path of a vehicle on a travel path layer; and
a guide object rendering step of rendering two-dimensional guide objects on a guide object layer, and
the displaying step further comprises the steps of:
displaying the travel path layer between the planar object layer and the three-dimensional object layer on the display panel; and
displaying the guide object layer after the text data layer on the display panel.

27. The method as claimed in claim 26, wherein the travel path rendering step comprises the steps of:
projecting the travel path of the vehicle on a projection plane to obtain values of two-dimensional projection coordinates;
converting the values of two-dimensional projection coordinates of the travel path into screen coordinates; and
rendering the travel path with the converted screen coordinates on the travel path layer.

28. The method as claimed in claim 26, wherein the guide object rendering step comprises the step of:
calculating coordinates of positions where the guide objects will be displayed on a screen of the display panel, and rendering the guide objects at the calculated coordinates of the positions on the guide object layer.

29. The method as claimed in claim 26, wherein the step of displaying the travel path layer and the guide object layer comprises the step of:
displaying them by transparently processing remaining regions thereof except the travel path and the guide objects, respectively.

30. The method as claimed in claim 26, wherein when the three-dimensional object layer is displayed, regions of the three-dimensional object layer overlapping with the travel path on the travel path layer are transparently processed so that the travel path can be fully displayed.
